# EUROPÄISCHE PATENTSCHRIFT

(11) **EP 0 506 800 B1**
(45) Veröffentlichungstag und Bekanntmachung des Hinweises auf die Patenterteilung: **28.09.1994**
(21) Anmeldenummer: 91901772.3
(22) Anmeldetag: 18.12.1990
(51) Int. Cl.: B62M 1/12, B62M 1/20

(54) **ANTRIEB FÜR MUSKELKRAFTBETRIEBENE FAHRZEUGE UND GERÄTE, INSBESONDERE FAHRRÄDER**
DRIVE SYSTEM FOR MUSCLE-POWERED EQUIPMENT AND VEHICLES, IN PARTICULAR BICYCLES
SYSTEME D'ENTRAINEMENT POUR DES VEHICULES ET APPAREILS MUS PAR LA FORCE MUSCULAIRE, NOTAMMENT DES BICYCLETTES

(30) Priorität: 18.12.1989 DE 3941768
(43) Veröffentlichungstag der Anmeldung: 07.10.1992
(73) Patentinhaber: LIU, Qingshan, D-81927 München (DE)
(72) Erfinder: LIU, Qingshan, D-81927 München (DE)
(86) Internationale Anmeldenummer: EP9002230
(87) Internationale Veröffentlichungsnummer: WO9108943

(56) Entgegenhaltungen:
- EP-A- 0 069 932
- DE-A- 2 927 675
- DE-C- 0 121 860
- FR-A- 2 511 461

## Beschreibung

Die Erfindung betrifft eine muskelkraftbetriebene Antriebsvorrichtung für Fahrzeuge und andere Geräte mit mindestens zwei unabhängig voneinander betreibbaren Antriebskomponenten, deren Antriebsbewegungen über Bewegungsübertragungsmittel auf eine Antriebswelle übertragbar sind.

Aus der französischen Patentschrift FR-974 908 ist es bekannt, für den Antrieb eines Fahrrads mehrere Antriebskomponenten vorzusehen, die unabhängig voneinander betrieben werden können. In der genannten Patentschrift ist hierzu die Kombination einer Sitz-Antriebseinrichtung mit einer Fuß-Antriebseinrichtung vorgesehen. Die Sitz-Antriebseinrichtung weist eine mit einem Schwenkhebel verbundene Sitzfläche auf, die durch den Fahrer um eine Schwenkachse des Hebels auf und ab bewegt wird. Die Auf- und-Ab-Bewegung wird durch einen Kettentrieb als Antriebsbewegung für das Fahrrad auf dessen Antriebswelle, die auf das Hinterrad wirkt, übertragen. Dieser Antriebsbewegung der Sitz-Antriebseinrichtung kann eine Antriebsbewegung der Fuß-Antriebseinrichtung überlagert werden. Hierzu sind die Pedale an Schwenkhebel angelenkt, die ebenfalls auf die Antriebswelle des Fahrrads wirken. Zum Antrieb des Fahrrads mittels der Fuß-Antriebseinrichtung werden die Pedale vom Fahrer abwechselnd getreten.

Beide Antriebsbewegungen, also sowohl die Antriebsbewegung der Sitz-Antriebseinrichtung als auch die Antriebsbewegung der Fuß-Antriebseinrichtung erfolgen durch Beanspruchung der Beinmuskulatur des Fahrers. Zur Erzeugung der Sitzantriebsbewegung muß sich der Fahrer mit seinen Beinen an den Pedalen abstoßen und zur Erzeugung der Pedalantriebsbewegung muß der Fahrer die Pedale abwechselnd treten. Somit werden beim Antrieb des bekannten Fahrrads trotz des Vorhandenseins zweier voneinander unabhängiger Antriebskomponenten im wesentlichen übereinstimmende Muskelgruppen, nämlich die Beinmuskulatur, beansprucht. Der mit dem bekannten Fahrrad erzielbare Kräftigungseffekt ist daher auf die Beinmuskulatur beschränkt.

Aus der deutschen Patentschrift DE-88 425 ist ein Fahrradantrieb bekannt, der zwar nur eine Antriebskomponente in Form eines Sitzantriebs aufweist, der jedoch aufgrund der Ausbildung des Sitzes als Schwenksitz eine Beanspruchung der Bein-, Rücken- und Armmuskulatur ermöglicht. Bei dem bekannten Sitzantrieb ist es jedoch nicht möglich, eine der genannten Muskelpartien, insbesondere nicht die Bauch-/Rückenmuskulatur, unabhängig von den anderen Muskelpartien zu beanspruchen, so daß zwar ein guter allgemeiner Kräftigungseffekt der Muskulatur erzielbar ist, jedoch ein schwerpunktmäßiges Auftrainieren bestimmter Muskelpartien, wie z.B. der Bauch-/Rückenmuskulatur, nicht möglich ist.

Aus dem DE-C-121860 sowie EP-A-069932 sind andere ähnliche Fahrradantriebe bekannt.

Der Erfindung liegt die Aufgabe zugrunde, eine gattungsgemäße Antriebsvorrichtung vorzuschlagen, deren einzelne, unabhängig voneinander betreibbare Antriebskomponenten eine gezielte Beanspruchung einzelner Muskelpartien, insbesondere der Bauch-/Rückenmuskulatur, ermöglichen.

Der Erfindung liegt der Gedanke zugrunde, durch eine gezielte Kombination bestimmter Antriebskomponenten sowohl eine Beanspruchung unterschiedlicher Muskelpartien als auch in jedem Fall eine Beanspruchung der Bauch-/Rückenmuskulatur zu ermöglichen. Dies wird durch die Kombination einer unmittelbar auf die Bauch-/Rückenmuskulatur wirkenden Sitzlehnen-Antriebskomponente mit einer weiteren, davon unabhängig betreibbaren Antriebskomponente erreicht, wobei für eine umfassende Muskelbeanspruchung sowohl der Beugungs- als auch Streckmuskulatur, sowohl eine Hin- als auch Herbewegung möglich sein soll, aber nicht in jedem Fall ist. Die Bewegungsübertragungsmittel können beliebig ausgeführt, sein, beispielsweise durch Seil, Kette oder Riementriebe, Kardanwelle als auch hydraulische Übertragungsmittel.

Eine erste Lösung der gestellten Aufgabe ist daher durch die Merkmale des Anspruchs 1 gegeben.

Hierbei ist eine Sitzlehnen-Antriebseinrichtung vorgesehen, deren Antriebsbewegung durch eine Schwenkbewegung einer Sitzlehne gegenüber einer Sitzfläche erfolgt und somit unmittelbar auf die Bauch-/Rückenmuskulatur wirkt. Die Relativbewegung der Sitzlehne gegenüber der Sitzfläche kann sowohl bei unbewegter Sitzfläche, also unabhängig von der Sitzflächenbewegung erfolgen, als auch bei bewegter Sitzfläche, also bei betriebener Sitzflächen-Antriebseinrichtung. Die Antriebsbewegung der Sitzflächen-Antriebseinrichtung verläuft dabei in Form einer hin und her gehenden Translationsbewegung der Sitzfläche auf einer in Längsrichtung der Vorrichtung verlaufenden Führungsbahn. Die Übertragung der Schwenkbewegung der Sitzlehne auf die Antriebswelle der Vorrichtung erfolgt über ein Getriebe, welches auch die Koppelung der Schwenkbewegung der Sitzlehne mit der Translationsbewegung der Sitzfläche zum überlagerten Antrieb der Antriebswelle ermöglicht, wobei unter dem Wort "Getriebe", ganz allgemein eine Vorrichtung zum Umformen oder Übertragen von Bewegung zu verstehen ist.

Die wahlweise Möglichkeit, die Sitzlehnen-Antriebskomponente unabhängig von der Sitzflächen-Antriebskomponente zu betreiben, ermöglicht es beispielsweise auch behinderten Fahrern, die erfindungsgemäße Vorrichtung zu benutzen, da ein Antrieb der Vorrichtung auch ohne den zum Betreiben der Sitzflächen-Antriebskomponente notwendigen Einsatz der Bein- und/oder Armmuskulatur möglich ist.

Die Antriebsbewegungen von Sitzfläche und Sitzlehne können verschiedenartig kombiniert werden. So kann die Sitzfläche beispielsweise nach vorne bewegt und die Sitzlehne gleichzeitig nach vorne gekippt werden. Ebenso ist es möglich, bei einer Rückwärtsbewegung des Sitzfläche die Lehne nach hinten zu kippen. In den genannten Fällen überlagern sich die dabei erzeugten Antriebsbewegungen. Ebenso ist natürlich auch eine gegenläufige Bewegung von Sitzfläche und Sitzlehne möglich. Insbesondere diese Bewegungen ermöglichen eine optimale Ausnutzung bzw. eine Beanspruchung der Rückenmuskulatur sowie auch der Bauchmuskulatur.

Eine weitere Lösung der der Erfindung zugrunde liegenden Aufgabe ist durch die Merkmale des Anspruchs 2 gegeben.

Bei dieser Lösung weist die erfindungsgemäße Vorrichtung neben der bereits erläuterten Sitzlehnen-Antriebseinrichtung als zweite Antriebskomponente eine Fuß-Antriebseinrichtung auf. Die Antriebsbewegung der Fuß-Antriebseinrichtung erfolgt durch Hin- und Herbewegung zumindest eines Pedals. Zur wahlweisen Überlagerung besteht auch hierbei die Möglichkeit, die Schwenkbewegung der Sitzlehne mittels eines Getriebes und einer Freilaufeinrichtung der Antriebsbewegung des Pedals zu überlagern oder lediglich die Sitzlehnen-Antriebseinrichtung oder die Fuß-Antriebseinrichtung zu betreiben.

Noch eine weitere Lösung der der Erfindung zugrunde liegenden Aufgabe weist die Merkmale des Anspruchs 3 auf.

Hierbei weist die erfindungsgemäße Vorrichtung neben einer Sitzlehnen-Antriebseinrichtung als zweite Antriebskomponente eine Hand-Antriebseinrichtung auf, deren Antriebsbewegung durch Hin- und Herbewegung von Betätigungsstangen erfolgt. Auch bei dieser erfindungsgemäßen Kombination der Sitzlehenen-Antriebseinrichtung mit der Hand-Antriebseinrichtung ist die Möglichkeit der Überlagerung der Sitzlehnen-Schwenkbewegung mit der Hin- und Herbewegung der Betätigungsstangen gegeben. Ebenso ist es möglich, zum Betreiben der Vorrichtung lediglich die Sitzlehnen-Antriebseinrichtung oder die Hand-Antriebseinrichtung zu nutzen. Wenn die erfindungsgemäße Vorrichtung als Fahrrad betrieben werden soll, können die Betätigungsstangen zur Lenkung des Fahrrads genutzt werden.

Ebenso wie die Vorrichtung nach Anspruch 1 sind die Vorrichtungen nach den Ansprüchen 2 und 3 besonders für Behinderte geeignet. So ermöglicht die Vorrichtung nach Anspruch 2 einen Betrieb ohne Arme, die Vorrichtung nach Anspruch 3 einen Betrieb ohne den Einsatz der Beine.

Die Vorrichtungen gemäß den Ansprüchen 1 und 3 können ergänzend mit einer Fuß-Antriebseeinrichtung als weiterer Antriebskomponente versehen sein. Hierbei erfolgt die Antriebsbewegung der Fuß-Antriebseinrichtung durch Hin- und Herbewegung zumindest eines Pedals. Über ein Getriebe und eine Freilaufeinrichtung besteht die Möglichkeit, die Antriebsbewegung der Fuß-Antriebseinrichtung den Antriebsbewegungen der anderen Antriebskomponenten zu überlagern.

Als vorteilhaft erweist es sich, wenn die Pedale der Fuß-Antriebseinrichtung in einer horizontalen Ebene bewegbar sind. Bei einer Schwenkbewegung der Pedale um eine vertikale Achse ist die Antriebsbewegung bzw. die durch die Antriebsbewegung erzeugte Antriebskraft unabhängig vom Gewicht des Fahrers. Darüber hinaus ermöglicht die kreisbogenförmige Bewegung der Pedale in der Horizontalebene eine weitreichende Ausnutzung bzw. Beanspruchung der Beinmuskulatur.

Vorteilhaft ist es auch, wenn die Pedale der Fuß-Antriebseinrichtung geradlinig bewegbar sind. Die Ausführung der Fuß-Antriebseinrichtung gemäß Anspruch 8 ermöglicht eine geradlinig ausgebildete Pedalbewegung, bei der die Muskelkraft optimal genutzt bzw. die Muskeln optimal beansprucht werden. Bei dieser Ausführung können beide Pedale in einem Pedal vereint sein, so daß die Antriebsbewegung mit beiden Beinen parallel ausführbar ist.

Die Ausführungsform der Fuß-Antriebseinrichtung gemäß Anspruch 9 stellt eine weitere konstruktive Variante dar, die eine Anpassung an besondere bauliche Gegebenheiten zuläßt.

Bei einer Abkoppelung der Fuß-Antriebseinrichtung vom Antrieb der Vorrichtung ergibt sich unabhängig von der Ausführung der Fuß-Antriebseinrichtung die Möglichkeit, die Pedale antriebslos und frei zu bewegen oder als Raststützen für die Füße zu nutzen.

Weiterhin besteht die Möglichkeit, eine bereits mehrere Antriebskomponenten aufweisende Vorrichtung gemäß der Erfindung mit einer zusätzlichen Hand-Antriebseinrichtung zu versehen, deren Antriebsbewegung durch Hin- und Herbewegung von Betätigungsstangen erfolgt. Genauso wie die übrigen Antriebskomponenten untereinander für den Antrieb der Vorrichtung beliebig kombinierbar sind, kann die Hand-Antriebseinrichtung mittels eines Getriebes und einer Freilaufeinrichtung den übrigen Antriebskomponenten überlagert werden. Wenn die Vorrichtung als Fahrrad ausgebildet ist, besteht darüber hinaus die Möglichkeit, die Betätigungsstangen der Hand-Antriebseinrichtung zur Lenkung der Vorrichtung zu verwenden.

Die über die Arme betätigte Hand-Antriebseinrichtung ermöglicht verschiedene Hand- bzw. Armbewegungen. So können die Arme nach vorne und nach hinten sowie synchron zu den Beinen bewegt werden. Es besteht aber auch die Möglichkeit, die Arme bei Betätigung der Hand-Antriebseinrichtung gemäß Anspruch 12 quer zur Längsachse der Vorrichtung auseinander- und zusammenzubewegen. Wenn im Falle der Ausbildung der Vorrichtung als Fahrrad dessen Lenkung über die Betätigungsstangen erfolgt, sind die Lenkbewegungen unabhängig von den Antriebsbewegungen. Die bei der Ausführungsform der Hand-Antriebseinrichtung gemäß Anspruch 12 verwendete Wendekupplung ermöglicht eine gleich- oder gegensinnige Antriebsbewegung der Hand-Antriebseinrichtung und der Fuß-Antriebseinrichtung. Mittels der Wendekupplung ist es auch möglich, die Hand-Antriebseinrichtung zu entkoppeln, wobei diese dann über eine weitere Kupplung fest mit dem Rahmen der Vorrichtung verbunden werden kann.

Weitere vorteilhafte Merkmale der Hand-Antriebseinrichtung sind den Unteransprüchen 13 und 14 zu entnehmen.

Anspruch 15 weist die Merkmale einer bevorzugten Ausführungsform eines kombinierten Antriebs der Vorrichtung aus einer Sitzflächen-Antriebseinrichtung und einer Sitzlehnen-Antriebseinrichtung auf. Gemäß den folgenden Ansprüchen ist es möglich, entweder die Sitzfläche am Rahmen der Vorrichtung oder die Sitzlehne gegenüber der Sitzfläche zu blockieren. Hierdurch ist auf vorteilhafte Weise die Möglichkeit geschaffen, die kombinierte Sitzflächen-/Sitzlehnen-Antriebseinrichtung durch die Blockierung einer der beiden Komponenten in eine reine Sitzflächen-Antriebseinrichtung oder Sitzlehnen-Antriebseinrichtung umzugestalten. Die Sitzlehnen-Antriebseinrichtung erweist sich dann als besonders effektiv, wenn eine enge Koppelung des Oberkörpers der die Vorrichtung benutzenden Person mit der Sitzlehne, etwa durch einen Gurt, erfolgt. Gleiches gilt auch für die Sitzflächen-Antriebseinrichtung, deren Wirksamkeit durch einen mit der Sitzfläche zusammenwirkenden Haltegurt gesteigert werden kann.

Eine aus der Sitzflächen-Antriebseinrichtung und der Sitzlehnen-Antriebseinrichtung gebildete Antriebskombination läßt sich auch von Behinderten, wie z.B. Arm- oder Beinamputierten, zum Betreiben der Vorrichtung nutzen. Da der Sitzflächen-Antrieb wahlweise über Beine oder Arme erfolgen kann, ist die genannte Antriebskombination sowohl von Armamputierten als von Beinamputierten nutzbar. In jedem Fall erfährt der Sitzflächen-Antrieb bei entsprechender Koppelung eine Unterstützung durch den, mittels des Oberkörpers betätigten Sitzlehnenantrieb. Bei gegenüber dem Rahmen der Vorrichtung blockierter Sitzfläche, also einer Beschränkung der Antriebskombination auf die reine Sitzlehnen-Antriebseinrichtung, ist die erfindungsgemäße Vorrichtung auch von Personen nutzbar, die weder über Beine noch über Arme verfügen.

Den Vorteil der Nutzung durch Armamputierte oder Beinamputierte weisen auch die beiden anderen vorgenannten Basis-Antriebskomponenten-Kompositionen, nämlich die Kombination Sitzlehnen-Antriebseinrichtung/Fuß-Antriebseinrichtung und die Kombination Sitzlehnen-Antriebseinrichtung/Hand-Antriebseinrichtung auf. Die erstgenannte Basis-Kombination ist in besonderem Maße für Armamputierte und die zweitgenannte Basis-Kombination für Beinamputierte geeignet.

Bei einer Ausgestaltung der Sitzlehne gemäß Anspruch 19 besteht darüber hinaus die Möglichkeit, eine durch die Drehung des Rückens der die Vorrichtung betreibenden Person betätigbare weitere Antriebskomponente vorzusehen. Zur Übertragung der Torsionsbewegung des Rückens auf die Antriebswelle der Vorrichtung sind Bewegungsübertragungsmittel, wie ein Seilzug, vorgesehen, die über Ringgriffe am oberen Lehnenteil befestigt sind. Die Ringgriffe sind vom Lehnenteil entkoppelbar, so daß diese beispielsweise auch hand- oder fußbetätigt werden können.

Weitere vorteilhafte Ausgestaltungen der erfindungsgemäßen Vorrichtungen sind den weiteren Unteransprüchen zu entnehmen.

Die erfindungsgemäße Antriebsvorrichtung kann bei unterschiedlichen Fahrzeugarten Anwendung finden; auch bei Wasser- und Luftfahrzeugen. Ein weiteres Anwendungsgebiet sind die verschiedenen Trainingsgeräte für die Körperertüchtigung.

Ausführungsbeispiele der Erfingung werden an Hand der Zeichung im folgenden beschrieben. Es zeigen:
Fig.1 eine schematische Darstellung der Antriebseinrichtungen,
Fig.2 und 3 Ausführungsbeispiele für die Fuß-Antriebseinrichtung,
Fig.4 und 5 solche für die Hand-Antriebseinrichtung
Fig.6 einen Sitzflächen- und eine Sitzlehnen-Antriebseinrichtung,

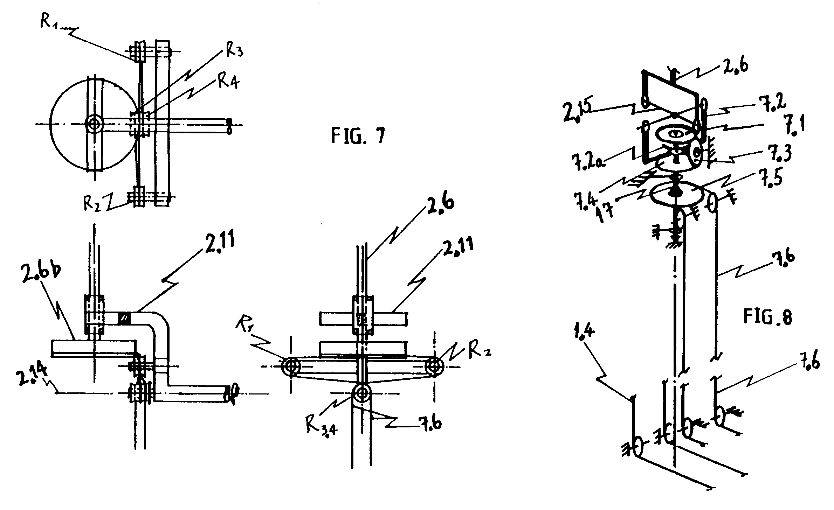

Fig.6' eine Kombinationsmöglichkeit für die Sitzflächen und die Sitzlehnen-Antriebseinrichtung mit der Möglichkeit, die Sitzfläche und/oder die Sitzlehne zu blockieren,
Fig.7 eine Variation der Hand-Antriebseinrichtung

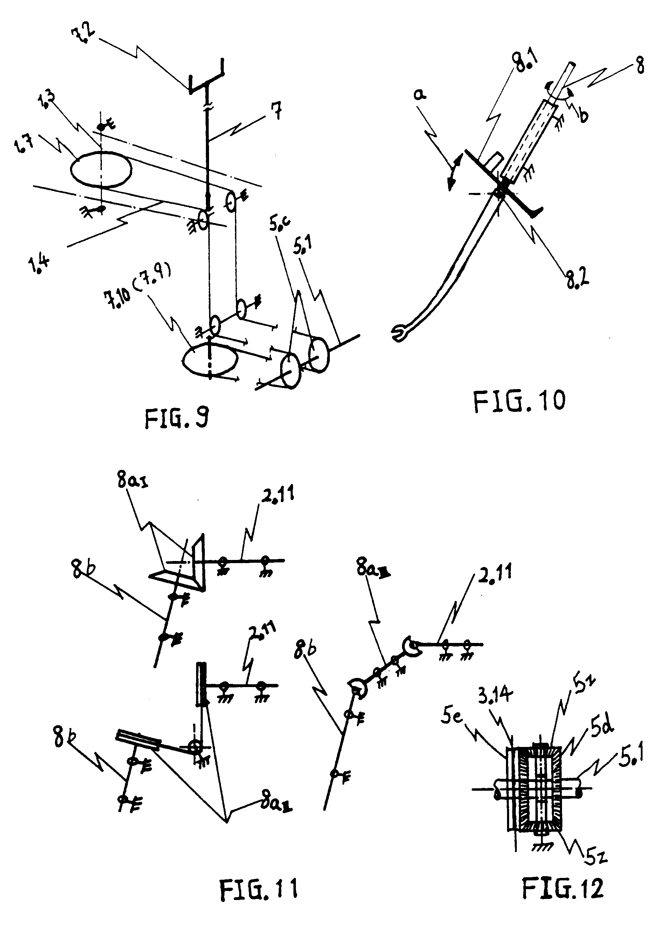

Fig.8 und 9 weitere Möglichkeiten für die Übertragung des Hand- und Fußantriebs,
Fig.10 die Fußpedale für Lenkung und Bremsung an der Vorderradgabel,
Fig.11 Ausführungsbeispiele für Übertragungssysteme der Lenkung,
Fig.12 eine detaillierte Darstellung der Freiläufe von Fig.6,

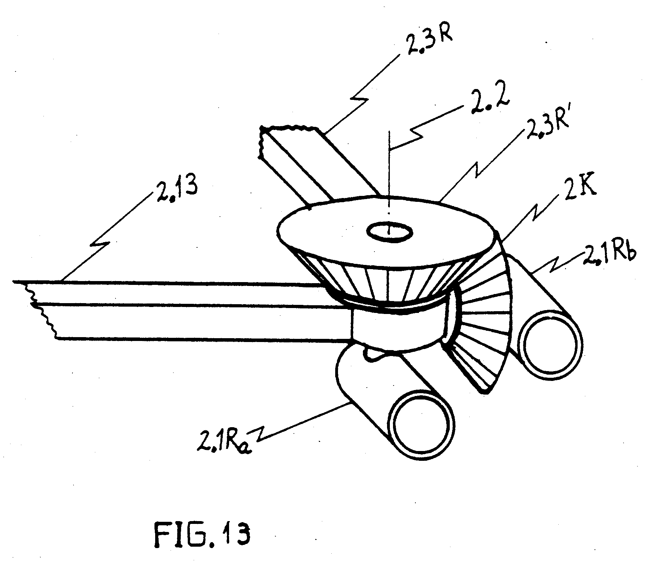

Fig.13 eine Variation des Handantriebsgestänges.

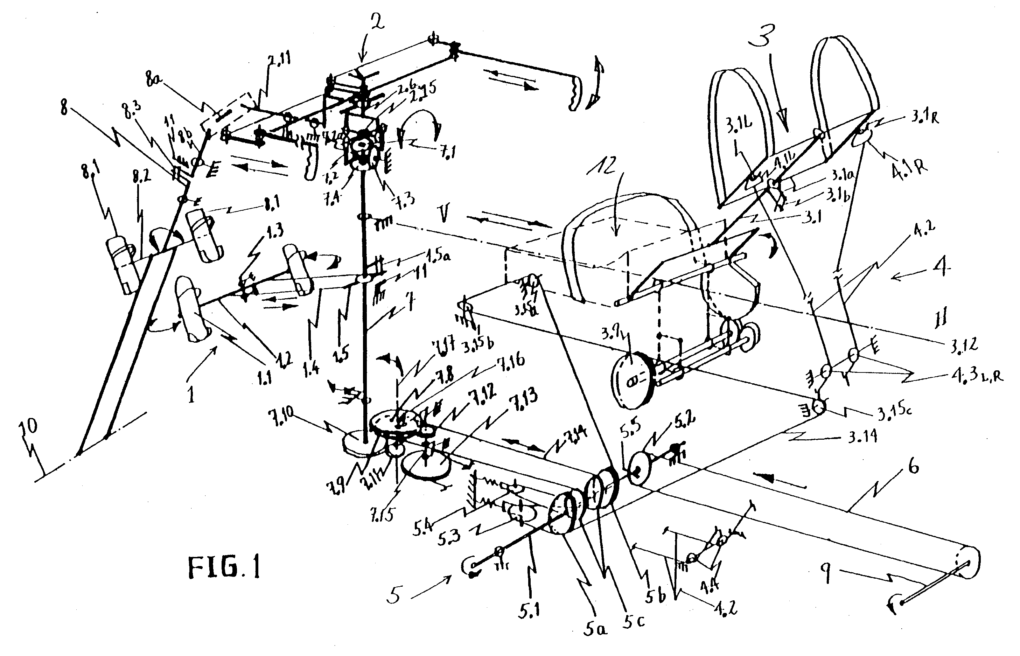

Das in Fig.1 dargestellte Antriebssystem besteht aus einer Fuß-Antriebseinrichtung 1, einer Hand-Antriebseinrichtung 2, einer Sitzlehnen-Antriebseinrichtung 3, einer Sitzflächen-Antriebseinrichtung 12 und einer Schulter-Antriebseinrichtung 4. Diese Antriebe werden über ein Freilaufsystem 5 und über eine Kette oder Riemen 6 auf die Antriebsachse 9 übertragen. Die Lenkung erfolgt über die Vorderradgabel 8.

Die in Fig.1 dargestellte Fuß-Antriebseinrichtung besteht aus den von den Füßen hin- und herbewegten Fußpedalen 1.1. Diese sind gelenkig mit einer Stange 1.2 verbunden. Die Stange 1.2 ist in ihrer Mitte bei 1.3 drehbar am Rahmen gelagert. Im Abstand von diesem Drehpunkt 1.3 sind zwei Zugseile 1.4 an der Stange 1.2 angebracht, die mit ihren anderen Enden mit einem zweiarmigen Hebel 1.5 verbunden sind. Dieser Hebel 1.5 kann über eine Kupplung 1.5a mit einer Welle 7 verbunden werden. Zur Arretierung der Pedale 1.1 kann die Kupplung 1.5a mit dem Rahmen 11 verbunden werden. Es ist auch möglich, daß die Kupplung 1.5a in eine Zwischenstellung gebracht werden kann, in welcher die Pedale 1.1 antriebslos bewegt werden können.

Die in Fig.5 vergrößert dargestellte Hand-Antriebseinrichtung 2 aus Fig.1 besteht aus zwei Stangen 2.1L, 2.1R, die an ihren freien Enden Betätigungsgriffe besitzen.

Die hin- und herbewegbaren Stangen 2.1R, 2.1L, übertragen diese Bewegung über Gelenke, deren Gelenkachsen mit 2.2 und 2.10 bezeichnet sind, auf eine Querstange 2.13. Diese ist in ihrer Mitte auf einer Welle 2.6 drehbar gelagert. Die Querstange 2.13 kann über eine Kupplung 2.12 mittels eines Teiles 2.6b drehfest mit der Welle 2.6 verbunden werden. Die Welle 2.6 besitzt an ihrem unteren Enden ein Kreuzgelenkteil 2.15. An den Gelenkachsen 2.2 und 2.10 können die Stangen 2.1R und 2.1L jeweils mit einer Stange 2.3R und 2.3L drehfest verbunden werden. An den freien Enden der Stangen 2.3R und 2.3L ist jeweils ein Gestänge 2.4R und 2.4L angelenkt. Dessen nach innen gerichtete Enden sind mit einem Stangenteil 2.7 bzw. 2.8 gelenkig verbunden, deren andere Enden drehfest miteinander verbunden werden können. Eine Kupplung 2.9 verbindet auch das Stangenteil 2.8 mit einer Lagerwelle 2.11. Diese trägt eine Lagerung für die Welle 2.6 und ist weiterhin schwenkbar am Rahmen 11 gelagert (Schwenkachse 2.14).

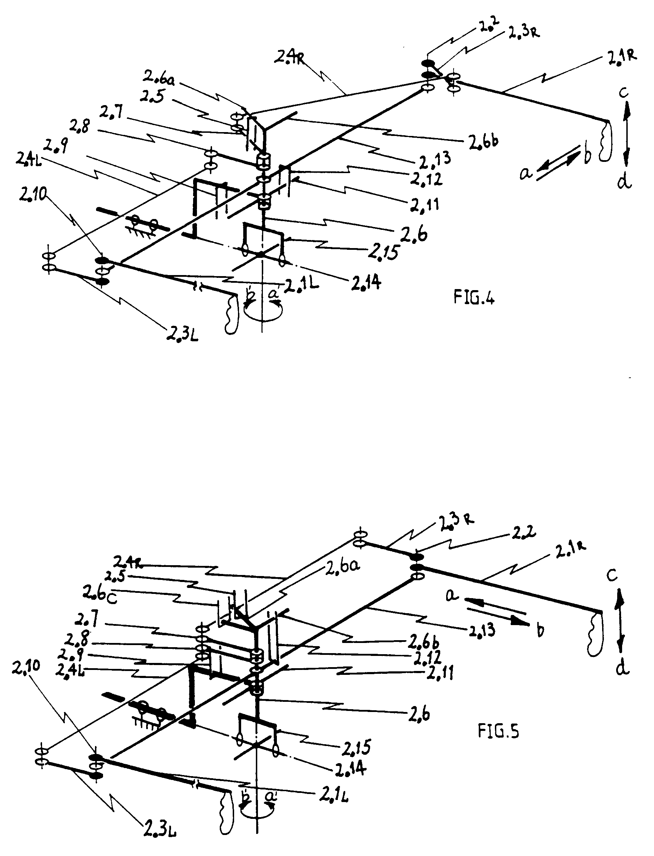

Eine Abänderung der in Fig.5 dargestellten Hand-Antriebseinrichtung 2 zeigt Fig.4. Dabei sind folgende Abweichungen gegenüber Fig.5 vorgesehen:
Die Stange 2.3R ist aus der in Fig.5 dargestellten Lage nach innen verdreht angeordnet. Gleichzeitig ist auch das Stangenteil 2.7 gegenüber dem Teil 2.8 -wie aus Fig.4 ersichtlich- verdreht. Das Stangenteil 2.7 ist mittels einer Kupplung 2.5 unter Zwischenschalten des Teiles 2.6a mit der Welle 2.6 verbindbar. Auf diese Weise sind die Teile 2.8, 2.7 und 2.6 drehfest miteinander verbunden. Das Stangenteil 2.8 ist in diesem Fall von der Lagerwelle 2.11 entkuppelt und zwei durch Lösen von der Kupplung 2.9. Die Querstange 2.13 ist durch die Kupplung 2.12 mit der Lagerwelle 2.11 gekoppelt. Die Lagerwelle 2.11 ist in der Horizontalebene nicht drehbar. Durch die gekoppelte Verbindung ist die Querstange 2.13 in dieser Ebene ebenfalls nicht drehbar. Die Querstange 2.13 kann sich nur mit der Lagerwelle 2.11 um die Achse 2.14 in der Stirnebene drehen, was zum Lenken des Vorderrads notwendig ist.

Bei dieser Kombination ist es möglich, die Zu-(Pfeil a) und Auseinanderbewegung (Pfeil b) der beiden Hände für den Antrieb nutzbar zu machen (s. Pfeil a', b').

Durch die Kupplung 7.2a sind drei verschiedene Bewegungsabläufe des Hand- und Fußantriebs möglich:
Bei einer Bewegung des rechten Pedals nach vorne, ist die rechte Handbewegung in der ersten Stellung von der Fußbewegung unabhängig, in der zweiten Stellung ist die Bewegung von der rechten Hand nach hinten, d.h. entgegengesetzt gerichtet und in der dritten Stellung ist die Handbewegung gleichsinnig.

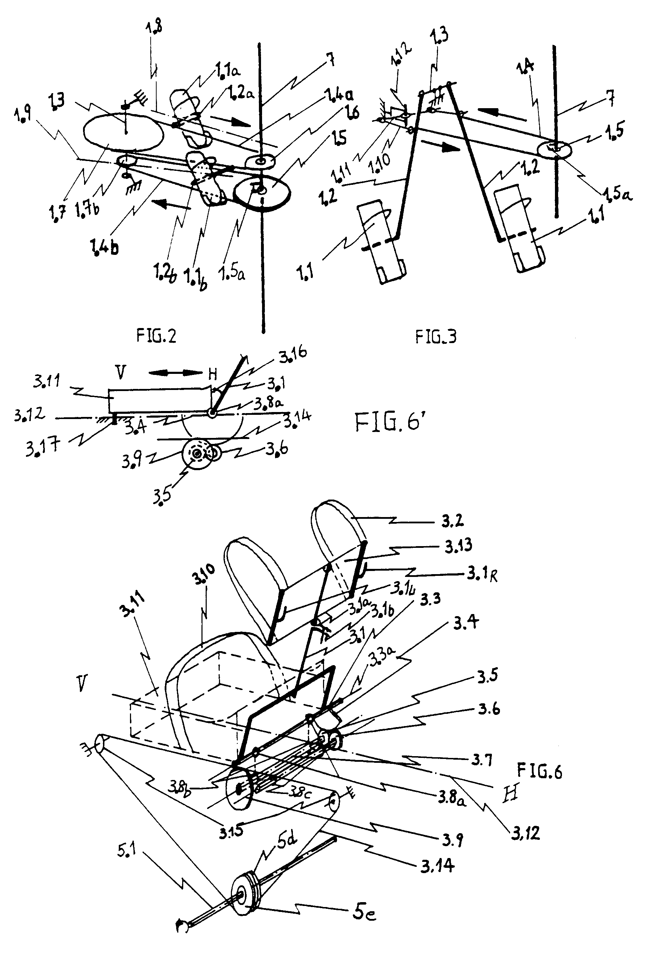

In Fig.2 ist eine andere Möglichkeit für den Fußantrieb dargestellt. Statt der Bewegung um die Achse 1.3 in Fig.1 auf einem (wenn auch annähend linearen) Teilkreis können sich die Füße bei dieser in Fig.2 dargestellten Möglichkeit auf einer völlig linearen Bahn bewegen.

Im Ausführungsbeispiel sind die Pedale 1.1a und 1.1b jeweils gelenkig mit einem an einer Kette oder Seil 1.4a angebrachten Mitnehmer 1.2a und 1.2b verbunden. Die Mitnehmer 1.2a und 1.2b bewegen sich entlang geradliniger Bahnen 1.8 und 1.9. Die Kette 1.4a umschlingt einerseits ein auf der Welle 7 drehbar gelagertes Rad 1.6 und andererseits ein auf der Achse 1.3 gelagertes Rad 1.7. Die Achse 1.3 ist am Rahmen 11 gelagert und besitzt ein zweites Rad 1.7b. Diese steht mit einem auf der welle 7 drehbar gelagerten Rad 1.5, welches, über eine Kupplung 1.5a mit dieser verbindbar ist, über eine Kette 1.4b in Wirkverbindung. Auch bei dieser Ausführung können die Pedale über die Kupplung 1.5a starr mit dem Rahmen 11 verbunden werden, so daß sie nur als Füßstutzen dienen.

Es ist auch eine gleichsinnige Fußbewegung möglich. Hierzu muß einer der Mitnehmer, z.B. 1.2a, von der Kette 1.4a entkoppelt und mit dem anderen verbunden werden. Dadurch kann die rechte Fußkraft der linken überlagert werden. Abweichen von der Darstellung in Fig.2 kann der untere Kettentrieb entfallen. In diesem Fall ist die Kupplung 1.5a lediglich mit dem Rad 1.6 zu verbinden.

Fig.3 zeigt eine Fuß-Antriebseinrichtung, bei der die Pedale 1.1 jeweils an einer Stange 1.2 gelagert sind, welche um eine rahmenfeste Achse 1.3 schwingen können. In dem den Pedalen 1.1 abgewandten Bereich ist an den Stangen 1.2 eine Kette 1.4 befestigt, die mit dem mit der Welle 7 oder dem Rahmen 11 kuppelbaren Rad 1.5 verbunden ist. Damit auch beim Rückwärtsbewegen der Stangen 1.2 eine Antriebskraft vorhanden ist, ist an jeder Stange 1.2 ein Verbingungsglied 1.10 angelenkt. Dieses ist an einem Hebel 1.11 befestigt, der in der Mitte am Rahmen über eine Achse 1.12 gelenkig gelagert ist.

Fig.6 zeigt das Sitzantriebssystem aus Sitzlehnen- und Sitzflächen-Antriebseinrichtung 3,12, in das weiterhin ein eine Schulter-Antriebseinrichtung 4 intergriert ist. Der Sitzantrieb erfolgt durch die Hin- und Herbewegung des Sitzes 3.11 auf einer Bahn 3.12. Der Fahrer wird dabei durch einen Gurt 3.10 auf dem Sitz 3.11 gehalten. Diese Sitzbewegung wird durch ein am Sitzboden gelagertes Rad 3.9 , welches von einem Seil oder einer Kette 3.14 umschlungen ist, über dieses Seil 3.14 auf eine zentrale Welle 5.1 des Freilaufsystems 5 übertragen, sofern dabei keine Bewegung der Sitzlehne (Rahmenteil 3.1 ) relativ zum Sitz erfolgt.

Das Rad 3.9 ist drehfest mit einer Welle 3.7 verbunden, die in Lagern 3.8b drehbar am Sitzboden gelagert ist. Am anderen Ende der Welle 3.7 ist ein Zahnrad 3.5 vorgesehen, welches mit einem weiteren Zahnradsegment 3.4 kämmt, das drehfest auf einer Welle 3.3 mit dem Lennenrahmen verbunden ist. Die Welle 3.3 ist an der Sitzlehne 3.11 mittels Lager 3.8a drehbar gelagert. Ein Kippen der Lehne z.B. nach vorne bewirkt gemäß Fig.6 über die Zahnräder 3.4 und 3.5 sowie die Welle 3.7 ein Verdrehen des Rades 3.9 im Uhrzeigersinn. Der Seilzug 3.14 wird dadurch relativ zum Sitz nach hinten gezogen.
-Die in Fig.6 dargestellte Welle mit dem Zahnrad 3.6 ist an sich Bestandteil der Variante nach Fig.6'-
Fig.6' zeigt eine andere Bewegungskombination von Sitzlehnen- und Sitzflächenantrieb. Das Zahrad 3.6 steht direkt mit dem Zahnradsegment 3.4 in Kontakt, ebenfalls mit dem Zahnrad 3.5. Wenn das Lehnenrahmenteil 3.1 nach vorne (Richtung V) kippt, wird das Zahnrad 3.6 im Uhrzeigersinn und somit das Zahnrad 3.5 und das Rad 3.9 im Gegenuhrzeigersinn gedreht, dadurch wird das Seil 3.14 relativ zum Sitz nach vorne gezogen.

Wenn der Sitz 3.11 nicht auf der Bahn 3.12 durch eine Bremse 3.17 gebremst wird und die Sitzlehne 3.1 auch relativ zum Sitz 3.11 frei beweglich ist, überlageren sich die Hin- und Herbewegung der Sitzfläche 3.11 mit der Kippbewegung der Sitzlehne 3.1. Wenn die Sitzfläche 3.11 dagegen durch ein Bremssystem 3.17 mit dem Rahmen 11 fest verbunden ist, ist die Sitzfläche 3.11 nicht mehr beweglich. Wenn die Sitzlehne 3.1 auch durch eine Blockierung 3.16 mit der Sitzfläche 3.11 fest verbunden ist, sind beide nicht mehr beweglich. In diesem Fall dient die Sitzfläche 3.11 nur der Sitzfunktion und zum Unterstützen anderer Antriebssysteme. Außerdem sind die Sitzfläche 3.11 sind die Sitzlehne 3.1 mit Hilfe der Blockierungssyteme 3.16 und 3.17 stufenlos verstellbar. Der verstellbare Bereich entspricht dem Antriebsbewegungsbereich.

### Schulter-Antriebseinrichtung 4:(Fig.1)

Zwei Ringgriffe 4.1L und 4.1R können jeweils bei 3.1L, 3.1R an der Sitzlehne 3.1 eingehakt werden. Durch Hin- und Herbewegung der Schultern, um die Hochachse der Sitzlehne 3.1, die unabhängig ist von der Lehnenantriebsbewegung, werden die Seile 4.2 gezogen, wobei diese Bewegung auf das Freilaufsystem 5 übertragen wird. In dem in Fig.1 gezeigten Fall, ist das Seil 4.2 mit dem Rad 7.13 verbunden, dessen Drehbewegung durch das Übersetzungssystem 7.15, 7.12, 7.8 und die Kupplung 7.16 auf das Rad 7.9 und durch das Seil 7.14 auf die Freiläufe 5c übertragen wird. Voraussetzung ist dabei, daß die Kupplung 3.1b von der Sitzlehne 3.1 gelöst ist.

Die Ringgriffe 4.1L und 4.1R können auch, ohne an die Sitzlehne 3.1 gekuppelt zu sein, von anderen Körperteilen z.B. Hände oder Füße betrieben werden. Die Umlenkrollen 4.3L und 4.3R müssen dabei der jeweils günstigsten Position angepaßt werden. Dadurch können viele verschiedene Bewegungen der Arme und der Beine in verschiedenen Varianten durchgeführt werden.

Zum Betreiben du Sitzlehnen- und der Schulterantriebseinrichtung ist eine Befestigung des Oberkörpers durch Gurte 3.2 zweckmäßig.

### Freilaufsystem 5:

Wie Fig.6 zeigt, ist das Seil 3.14 mit dem Freilauf 5e verbunden. Bei einer Bewegung des Sitzes 3.11 nach hinten wird der Freilauf 5e durch das Seil 3.14 im Uhrzeigersinn, d.h. in diesem Fall gegen die Antriebsrichtung, getrieben (Freilauf). Durch die in Fig.12 dargestellte Ausbildung sind die beiden Freiläufe 5e und 5d stets gegensinnig wirksam, d.h. die Zentralwelle 5.1 wird stets von einem der beiden Freiläufe angetrieben.

Das in Fig.1 gezeigte Sitzantriebssystem aus Sitzlehnen- und Sitzflächenantriebseinrichtung treibt das Seil 3.14 hin und her. Die Führung des Seils 3.14, das mit dem Freilauf 5a verbunden ist, erfolgt über die Umlenkrolle 5.3, den Freilauf 5b, über die Umlenkrollen 3.15a, 3.15b zurück zum Rad 3.9. Wenn das Rad 3.9 sich in die Richtung V dreht oder durch die Sitzfläche 3.11 in diese Richtung bewegt wird, wird das Seil 3.14 zwischen der Umlenkrolle 3.15c und dem Freilauf 5a nach oben hinten gezogen. Der Freilauf 5a treibt die Welle 5.1 in die Antriebsrichtung. Bei einer Drehung und/oder Bewegung des Rades 3.9 in Richtung H bewirkt der Freilauf 5b den Antrieb.

Die Zentralwelle 5.1 ist durch Wellenlager am Rahmen 11 gelagert. Die Umlenkräder 5.3, 5.4 sind ebenfalls am Rahmen fest oder durch Federn elastisch befestigt. Auf der Zentralwelle 5.1 ist ein Antriebsrad 5.2 gelagert, das durch eine Kupplung 5.5 mit der Welle 5.1 drehfest kuppelbar ist. Von dem Rad 5.2 wird die Antriebskraft auf das Hinterrad 9 über eine Kette 6 übertragen. Der Antrieb kann durch die Kupplung 5.5 (z.B. beim Zurückschieben des Fahrrads) abgekuppelt werden. Es bleibt noch zu erwähnen, daß am unteren Ende der Welle 7 ein Zahnrad 7.10 fest angebracht ist, welches über eine Übersetzung 7.11 und 7.9 die Drehbewegung der Welle 7 auf die Freiläufe 5c überträgt.

Die Drehbewegung der Lagerwelle, die am Rahmen 11 gelagert ist, wird durch ein Übertragungssystem 8a (z.B. Kegelradgetriebe 8aI, Seilzug 8aII, Kreuzgelenkwellen 8aIII, s.Fig.11) auf eine Welle 8b über die Kupplung 8.3 (s. Fig.1) und auf die Vorderachsengabel 8 übertragen. Mit 8.1 ist ein Fußlenkungspedal bezeichnet, (s. auch Fig.10), mit dem auch gebremst werden kann. Das Pedal 8.1 ist auf einer Achse 8.2 der Gabel 8 drehbar gelagert. Der Pfeil a zeigt die Bremsbewegung und der Pfeil b zeigt die Lenkungsbewegung des Pedals 8.1.

Das Teil 10 ist die Vorderradachse, die sich am Ende der Gabel 8 befestigen läßt.

Fig.7 zeigt ein andere Möglichkeit für die Hand-Antriebseinrichtung 2:
Die Hin- und Herdrehung von Welle 2.6 wird durch eine Seilscheibe 2.6b mit darauf gerolltem Seil 7.6 über Umlenkrollen R1 bis R4 in eine Hin- und Herbewegung umgewandelt. Wichtig dabei ist, daß die Rollen R3 und R4 gleichachsig sind mit der Achse 2.14 und der Lagerwelle 2.11. Dadurch ist die Antriebsbewegung praktisch auch unabhängig von der Lenkbewegung.

Fig.8 zeigt außerdem eine andere Möglichkeit, die Bewegung von der Hand-Antriebseinrichtung 2 über eine Umlenkrolle 7.5 und einen Seil- oder Kettenzug zu Übertragen. Auf diese Weise kann den baulichen Gegebenheiten in einfacher gewichtsparender Art Rechnung getragen werden.

Fig.9 zeigt eine andere Möglichkeit der Übertragung des Hand- und Fußantriebs, sowie eine weitere Kombination dieser beiden Antriebe. Hier wird das Seil 1.4 nicht wie in den Fig.1 bis 3 gezeigt, direkt mit der Welle 7 (z.B. durch 1.5 und 1.5a) verbunden, sondern über Rollen direkt mit den Freiläufen 5c und danach mit dem Rad 7.10 (oder Rad 7.9).

Fig.13 zeigt ein Abänderung des Handantriebs nach den Fig. 1, 4 und 5 mit der Möglichkeit, die Stangen 2.1R und 2.1L in einer zur Längsachse des Fahrrads parallelen Ebene entweder gleich- oder gegensinnig zu schwenken. Für die Lenkung sind bei dieser Variante die Pedale (z.B. Fig.10) notwendig. In diesem Fall ist die Hand-Antriebseinrichtung 2 durch die Kupplung 8.3 mit dem Rahmen 11 fest zu verbinden und die Querstange 2.13 durch die Kupplung 2.12 mit der Lagewelle 2.11 zu kuppeln. Dadurch ist die Querstange 2.13 nicht mehr gegenüber dem Rahmen beweglich. Dabei ist die Kupplung 2.6c (Fig.5) mit dem Stangenteil 2.7 und somit auch mit dem Teil 2.8 zu verbinden (bei gegensinniger Bewegung); bei gleichsinniger Schwenkung ist dagegen die Kupplung 2.5, wie in Fig.4 dargestellt, mit dem Stangenteil 2.7 zu verbinden.

## Patentansprüche

1. Muskelkraftbetriebene Antriebsvorrichtung für Fahrzeuge und andere Geräte mit mindestens zwei unabhängig voneinader betreibbaren Antriebskomponenten, deren Antriebsbewegungen über Bewegungsübertragungsmittel auf eine Antriebswelle übertragbar sind,
**dadurch gekennzeichnet,**
- daß die erste Antriebskomponente aus einer Sitzlehnen-Antriebseinrichtung (3) gebildet ist, deren Antriebsbewegung durch eine Schwenkbewegung einer Sitzlehne (3.1) gegenüber einer Sitzfläche (3.11) erfolgt, und
- daß, die zweite Antriebskomponente aus einer Sitzflächen-Antriebseinrichtung (12) gebildet ist, deren Antriebsbewegung durch eine hin- und hergehende Translationsbewegung der Sitzfläche (3.11) auf einer in Längsrichtung der Vorrichtung verlaufenden Bahn (3.12) erfolgt,
wobei die Schwenkbewegung der Sitzlehne (3.1) mittels einer Vorrichtung zum Umformen oder Übertragen von Bewegungen (3.4, 3.5, 3.6, 3.9) und eines Freilaufsystems (5) der Translationsbewegung der Sitzfläche (3.11) zum kombinierten Antrieb der Antriebswelle (5.1) überlagerbar ist.

2. Muskelkraftbetriebene Antriebsvorrichtung für Fahrzeuge und andere Geräte mit mindestens zwei unabhängig voneinander betreibbaren Antriebskomponenten, deren Antriebsbewegungen über Bewegungsübertragungsmittel auf eine Antriebswelle übertragbar sind,
**dadurch gekennzeichnet,**
- daß die erste Antriebskomponente aus einer Sitzlehnen-Antriebseinrichtung (3) gebildet ist, deren Antriebsbewegung durch eine Schwenkbewegung einer Sitzlehne (3.1) gegenüber einer Sitzfläche (3.11) erfolgt, und
- daß die zweite Antriebskomponente aus einer Fuß-Antriebseinrichtung (1) gebildet ist, deren Antriebsbewegung durch eine Hin- und Herbewegung zumindest eines Pedals (1.1) erfolgt,
wobei die Schwenkbewegung der Sitzlehne (3.1) mittels einer Vorrichtung zum Umformen oder Übertragen von Bewegungen (3.4, 3.5, 3.6, 3.9) und eines Freilaufsystems (5) der Hin- und Herbewegung des Pedals (1.1) zum kombinierten Antrieb der Antriebswelle (5.1) überlagerbar ist.

3. Muskelkraftbetriebene Antriebsvorrichtung für Fahrzeuge und andere Geräte mit mindestens zwei unabhängig voneinander betreibbaren Antriebskomponenten, deren Antriebsbewegungen über Bewegungsübertragungsmittel auf eine Antriebswelle übertragbar sind,
**dadurch gekennzeichnet,**
- daß die erste Antriebskomponente aus einer Sitzlehnen-Antriebseinrichtung (3) gebildet ist, deren Antriebsbewegung durch eine Schwenkbewegung einer Sitzlehne (3.1) gegenüber einer Sitzfläche (3.11) erfolgt, und
- daß die zweite Antriebskomponente aus einer Hand-Antriebseinrichtung (2) mit handbetätigbaren Stangen (Betätigungsstangen 2.1L, 2.1R) gebildet ist, derern Antriebsbewegung durch eine Hin- und Herbewegung der Betätigungsstangen (2.1L, 2.1R) erfolgt,
wobei die Schwenkbewegung der Sitzlehne (3.1) mittels einer Vorrichtung zum Umformen oder Übertragen von Bewegungen (3.4, 3.5, 3.6, 3.9) und eines Freilaufsystems (5) der Hin- und Herbewegung der Handantriebseinrrichtung (2.1L, 2.1R) zum kombinierten Antrieb der Antriebswelle (5.1) überlagerbar ist, und im Fall der Ausbildung der Vorrichtung als Fahrrad, dieses über die Betätigungsstangen (2.1L, 2.1R) lenkbar ist.

4. Vorrichtung nach Anspruch 1 oder 3,
**dadurch gekennzeichnet,**
daß eine weitere Antriebskomponente aus einer Fuß-Antriebseinrichtung (1) gebildet ist, deren Antriebsbewegung durch eine Hin- und Herbewegung zumindest eines Pedals (1.1) erfolgt,
wobei die Antriebsbewegung der Fuß-Antriebseinrichtung (1) den Antriebsbewegungen der anderen Antriebskomponenten mittels einer Vorrichtung zum Umformen oder Übertragen von Bewegungen (1.4, 1.5, 7.10; 1.4, 1.5, 1.6, 7.10) und eines Freilaufsystems (5) überlagerbar ist.

5. Vorrichtung nach Anspruch 2 oder 4,
**dadurch gekennzeichnet,**
daß die Pedale (1.1) der Fuß-Antriebseinrichtung (1) in einer etwa horizontalen Ebene bewegbar sind.

6. Vorrichtung nach Anspruch 5,
**dadurch gekennzeichnet,**
daß die Fuß-Antriebseinrichtung (1) aus einer um eine etwa in vertikaler Richtung verlaufende Achse (1.3) schwenkbaren horizontalen Stange (1.2) und den darauf gelenkig gelagerten Pedalen (1.1) besteht,
wobei in seitlichem Abstand von der Schwenkachse (1.3) an der Stange (1.2) Bewegungsübertragungsmittel, insbesondere Zugseile oder Ketten (1.4), angebracht sind, die an einem Hebel (1.5) enden, der über eine Kupplung (1.5a) mit einer etwa in vertikaler Richtung verlaufenden Welle (7) verbindbar ist, die ihrerseits die Bewegung an ein Bewegungsübertragungsmittel und den zugeordneten Freilauf des Freilaufsystems (5) überträgt.

7. Vorrichtung nach Anspruch 2 oder 4,
**dadurch gekennzeichnet,**
daß die Pedale (1.1) der Fuß-Antriebseinrichtung (1) geradlinig bewegbar sind.

8. Vorrichtung anch Anspruch 7,
**dadurch gekennzeichnet,**
daß die Fuß-Antriebseinrichtung (1) aus zwei Pedalen (1.1a, 1.1b) besteht, die an einem Bewegungsübertragungsmittel, vorzugsweise einem endlosen Zugseil (1.4a), drehbeweglich gelagert sind,
wobei das Zugseil (1.4a) zwei voneinander beabstandete Umlenkrollen (1.6, 1.7) umschlingt, die durch die lineare Pedalbewegung antreibbar und durch ein Übersetzungsvorrichtung zum Umformen oder Übertragen von Bewegungen (1.7, 1.3, 1.7b, 1.4b, 1.5) über eine Kupplung (1.5a) mit einer etwa in vertikaler Richtung verlaufenden Welle (7) verbindbar sind, die ihrerseits die Bewegung an ein weiteres Bewegungsübertragungsmittel, vorzugsweise einen Seilzug oder Kettenzug, und den zugeordneten Freilauf des Freilaufsystems (5) überträgt.

9. Vorrichtung nach Anspruch 2 oder 4,
**dadurch gekennzeichnet,**
daß die Fuß-Antriebseinrichtung (1) aus zwei an je einem Hebel (1.2) hin- und herschwenkbaren Pedalen (1.1) besteht,
wobei an den die Pedale (1.1) endseitig tragenden Hebeln (1.2) ein Bewegungsübertragungsmittel, vorzugsweise ein Seilzug (1.4) befestigt ist, der über eine Umlenkrolle (1.5) läuft, die über eine Kupplung (1.5a) mit einer etwa in vertikaler Richtung verlaufenden Welle (7) verbindbar ist, die ihrerseits die Bewegung an ein wieteres Bewegungsübertragungsmittel, vorzugsweise einen Seilzug oder Kettenzug, und den zugeordneten Freilauf des Freilaufsystems (5) überträgt.

10. Vorrichtung nach Anspruch 1 oder 2,
**dadurch gekennzeichnet,**
daß eine weitere Antriebskomponente aus einer Hand-Antriebseinrichtung (2) mit handbetätigbaren Stangen (Betätigungsstangen 2.1L, 2.1R) gebildet ist, deren Antriebsbewegung durch eine Hin- und Herbewegung der Betätigungsstangen (2.1L, 2.1R) erfolgt,
wobei die Antriebsbewegung der Hand-Antriebseinrichtung (2) den Antriebsbewegungen der anderen Antriebskomponenten mittels einer Vorrichtung zum Umformen oder Übertragen von Bewegungen (7.10, 7.11, 7.8) und eines Freilaufsystems (5) überlagerbar ist, und im Fall der Ausbildung der Vorrichtung als Fahrrad dieses über die Betätigungsstanden (2.1L, 2.1R) lenkbar ist.

11. Vorrichtung anch Anspruch 3 oder 10,
**dadurch gekennzeichnet,**
daß die Betätigungsstangen (2.1L, 2.1R) der Hand-Antriebseinrichtung (2) in Längsrichtung der Vorrichtung und/oder quer dazu auseinander- und zueinander bewegbar sind.

12. Vorrichtung nach einem oder mehreren der vorhergehenden Ansprüche,
**gekennzeichnet durch**
eine in der Länsebene der Vorrichtung angeordnete horizontale Lagerwelle (2.11), die mit dem vorderen Ende schwenkbar am Rahmen gelagert ist, am hinteren Ende kurbelförmig abgewinkelt ist und eine Lagerung für eine etwa vertikal verlaufende Welle (2.6) aufweist, an der eine in Querrichtung weisende Stange (2.13) schwenkbar gelagert ist, die eine mit der Welle (2.6) oder mit der Lagerwelle (2.11) kuppelbare Kupplung (2.12) aufweist, mit einer auf der Lagerwelle (2.11) angeordneten Kupplung (2.9) zum Kuppeln mit einem Stangenteil (2.8), welcher auf der Welle (2.6) drehbar gelagert und mit einem Stangenteil (2.7) einstellbar verbunden ist, mit einer Kupplung (2.5 oder 2.6c), die mit dem Stangenteil (2.10) kuppelbar ist, mit den an den Enden der Querstange (2.13) schenkbar gelagerten Betätigungsstangen (2.1L, 2.1R) zur Handbetätigung, die jeweils über Lagerstellen (2.2, 2.10) hinaus eine richtungsveränderbare Verlängerungsstande (2.3L, 2.3R) aufwisen, die gelenkig mit einem in Querrichtung verlaufenden Gestänge (2.4L, 2.4) verbunden sind, dessen innere Enden jeweils mit den Stangenteilen (2.7, 2.8) gelenkig verbunden sind,
wobei an der vertikalen Welle (2.6) ein Kreuzgelenk (2.15, 7.2) angeordnet ist, das über eine Wendekupplung (7.2a, 7.1, 7.3, 7.4) die vertikale Welle (2.6) mit der darunterliegenden, von der Fuß-Antriebseinrichtung (1) beaufschlagten vertikalen Welle (7) verbindet.

13. Vorrichtung nach einem oder mehreren der vorangehenden Ansprüche,
**dadurch gekennzeichnet,**
daß die Betätigungsstanden (2.1L, 2.1R) in vertikaler Ebene gleichsinnig oder gegensinnig bewegbar sind.

14. Vorrichtung nach Anspruch 13,
**dadurch gekennzeichnet,**
daß die Betätigungsstangen (2.1L, 2.1R) in einer Halterung (2.1Rb)gehalten sind, die über Kegekräder (2K, 2.3R')mit den Verlängerungsstangen (2.3L, 2.3R) verbunden sind.

15. Vorrichtung nach Anspruch 1,
**dadurch gekennzeichnet,**
daß, die Sitzfläche (3.11) der Sitzflächen-Antriebseinrichtung (12) eine horizontal ausgerichtete, drehbar gelagerte Welle (3.7) aufweist, an deren einem Ende ein Rad (3.9) drehfest angebracht ist, welches in Eingriff mit einem über das Freilaufsystem (5) geführten Seilzug (3.14) steht, und an deren anderem Ende ein Zahnrad (3.5) drehfest gelagert ist, welches mit einem weiteren Zahnrad (3.4) direkt oder über ein Zwischenrad (3.6) indirekt kämmt, das (3.4) mit der Sitzlehne (3.1) durch eine an der Sitzfläche (3.11) gelagerte welle (3.3) drehfest verbunden ist.

16. Vorrichtung nach Anspruch 2 oder 3,
**dadurch gekennzeichnet,**
daß, eine weitere Antriebskomponente aus einer Sitzfläcen-Antriebseinrichtung (12) gebildet ist, deren Antriebsbewegung druch eine hin- und hergehende Translationsbewegung der Sitzfläche (3.11) auf einer in Längsrichtung der Vorrichtung verlaufenden Bahn (3.12) erfolgt,
wobei die Antriebsbewegung der SitzflächenAntriebseinrichtung (12) den Antriebsbewegungen der anderen Antriebskomponenten mittels einer Vorrichtung zum Umformen oder Übertragen von Bewegungen (3.9) und eines Freilaufsystems (5) überlagerbar ist.

17. Vorrichtung nach einem oder mehreren der vorangehenden Ansprüche,
**dadurch gekennzeichnet,**
daß, die Sitzfläche (3.11) an einem Rahmen der Vorrichtung blockiert ist.

18. Vorrichtung nach einem oder mehreren der vorangehenden Ansprüche,
**dadurch gekennzeichnet,**
daß die Sitzlehne (3.1) an der Sitzfläche (3.11) blockierbar ist.

19. Vorrichtung nach Anspruch 1 oder 15,
**dadurch gekennzeichnet,**
daß ein oberer Lehnenteil (3.13) der Sitzlehne (3.1) um eine in der Ebene der Sitzlehne (3.1) Verlaufende Achse schwenkbar und über eine Kupplung (3.1b) mit dieser kuppelbar gelagert ist und seitlich an dem Lehnenteil (3.13) jeweils eine Einhängeinrichtung, vorzugweise ein Haken (3.1L, 3.1R), zum Einhängen von Ringgriffen (4.1L, 4.1R) vorgesehen ist, deren hin- und herschwingende Bewegung über ein Bewegungsübertragungsmittel, vorzugsweise einen Seilzug (4.2), und Umlenkrollen (4.3L, 4.3R) sowie Übersetzungsmittel (7.13, 7.15, 7.12, 7.8, 7.16, 7.9) auf das Freilaufsystem (5) übertragen werden.

20. Vorrichtung nach Anspruch 19,
**dadurch gekennzeichnet,**
daß die Ringgriffe (4.1L, 4.1R) handbetätigbar oder fußbetätigbar sind.

21. Vorrichtung nach einem oder mehreren der vorangehenden Ansprüche,
**gekennzeichnet durch**
ein mit dem unteren Ende der vonder Fuß-Antriebseinrichtung (1) beaufschlagten vertikalen Welle (7) drehfest verbundenes Zahnrad (7.10), welches über eine Übersetzung (7.11, 7.17, 7.9) mit dem zum Freilaufsystem (5) fürhrenden Bewegungsübertragungsmittel, vorzugsweise einem Seilzug (7.14, 6), und der Antriebsachse (9) in Verbindung steht.

22. Vorrichtung nach einem oder mehreren der vorangehenden Ansprüche,
**dadurch gekennzeichnet,**
daß die Antriebsbewegung der Hand-Antriebseinrichtung (2) über eine Scheibe (7.5), welche an einer vertikalen Welle (17) drehfest gelagert ist, mittels eines Bewegungsübertragungsmittels, vorzugsweise eines Seilzugs (7.6), und die Antriebsbewegung der Fuß-Antriebseinrichtung (1) über ein weiteres Bewegungsübertragungsmittel, vorzugsweise einen Seilzug (1.4), auf das Freilaufsystem (5) übertragbar ist.

23. Vorrichtung nach einem oder mehreren der vorangehenden Ansprüche,
**dadurch gekennzeichnet,**
daß die Drehbewegung der die Antriebsbewegung der Hand-Antriebseinrichtung (2) weiterleitenden Welle (2.6) über eine an deiser Welle vorgesehene Seilzugscheibe (2.6b) auf den zum Freilaufsystem (5) führenden Seilzug (7.6) übertragbar ist.

24. Vorrichtung nach einem oder mehreren der vorangehenden Ansprüche,
**dadurch gekennzeichnet,**
daß ein Freilauf des Freilaufsystems (5) jeweils aus zwei koaxial angeordneten Freilaufrädern (5e, 5d) besteht, von denen das eine Freilaufrad (5e) vom Seilzug (3.14) angetrieben wird, und welches den Antrieb über Zwischenräder (5z) und das zweite Freilaufrad (5d) auf die Antriebswelle (5.1) überträgt.

25. Vorrichtung nach einem oder mehreren der vorangehenden Ansprüche,
**dadurch gekennzeichnet,**
daß die Lagerwelle (2.11) zur Übertragung einer Drehbewegung mittels Übertragungsglieder (8a) und einer Kupplung (8.3) mit der Vorderradgabe (8) verbunden ist, welche seitliche Fußpedale (8.1) zur Lenkung und Bremsund aufweist.

26. Vorrichtung nach einem oder mehreren der vorangehenden Ansprüche,
**dadurch gekennzeichnet,**
daß die Antriebskraft von dem Hand- und/oder Fußantrieb, der sich an den Positionen 7.10/7.9 und/oder 1.7 befindet, mit Hilfe des Seils 1.4 direkt auf dem Freilaufsystem 5c übertragen wird.

27. Vorrichtung nach einem oder mehreren der vorangehenden Ansprüche,
**dadurch gekennzeichnet,**
daß das Freilaufsystem (5) beim Betätigen mindesten eine der Antriebskomponenten sowohl in Hin- als auch in Herrichtung, die Antriebswelle (5.1) immer in eine Richtung betreibt.

## Claims

1. Muscle-powered drive mechanism for vehicles and other equipment with at least two drive components which may be operated independently from each other and the drive movements of which may be transmitted to a drive shaft via movement transmission means,
**characterized in that**
- the first drive component is formed by a seat backrest drive mechanism (3) whose drive movement is generated by a swivel movement of a seat backrest (3.1) relative to a seat surface (3.11), and
- the second drive component is formed by a seat surface drive mechanism (12) whose drive movement is generated by a reciprocating translation movement of the seat surface (3.11) on a track (3.12) extending in longitudinal direction of the device,
whereby the swivel movement of the seat backrest (3.1) may be superimposed on the translation movement of the seat surface (3.11) via a device for transforming or transmitting movements (3.4, 3.5, 3.6, 3.9) and a freewheel system (5) for a combined drive of the drive shaft (5.1).

2. Muscle-powered drive mechanism for vehicles and other equipment with at least two drive components which may be operated independently from each other and the drive movements of which may be transmitted to a drive shaft via movement transmission means,
**characterized in that**
- the first drive component is formed by a seat backrest drive mechanism (3) whose drive movement is generated by a swivel movement of a seat backrest (3.1) relative to a seat surface (3.11), and
- the second drive component is formed by a foot-powered drive mechanism (1) whose drive movement is generated by a reciprocating movement of at least one pedal (1.1),
whereby the swivel movement of the seat backrest (3.1) may be superimposed on the reciprocating movement of the pedal (1.1) via a device for transforming or transmitting movements (3.4, 3.5, 3.6, 3.9) and a freewheel system (5) for a combined drive of the drive shaft (5.1).

3. Muscle-powered drive mechanism for vehicles and other equipment with at least two drive components which may be operated independently from each other and the drive movements of which may be transmitted to a drive shaft via movement transmission means,
**characterized in that**
- the first drive component is formed by a seat backrest drive mechanism (3) whose drive movement is generated by a swivel movement of a seat backrest (3.1) relative to a seat surface (3.11), and
- the second drive component is formed by a hand-powered drive mechanism (2) with hand-operated rods (operating rods 2.1L, 2.1R) whose drive movement is generated by a reciprocating movement of the operating rods (2.1L, 2.1R)
whereby the swivel movement of the seat backrest (3.1) may be superimposed on the reciprocating movement of the hand-powered drive means (2.1L, 2.1R) via a device for transforming or transmitting movements (3.4, 3.5, 3.6, 3.9) and a freewheel system (5) for a combined drive of the drive shaft (5.1), and where - if the device is constructed as a bicycle - the latter may be steered via these operating rods (2.1L, 2.1R).

4. Device according to Claim 1 or 3,
**characterized in that**
a further drive component is formed by a foot-powered drive mechanism (1) whose drive movement is generated by a reciprocating movement of at least one pedal (1.1), whereby the drive movement of the foot-powered drive mechanism (1) may be superimposed on the drive movements of the other drive components via a device for transforming or transmitting movements (1.4, 1.5, 7.10; 1.4, 1.5, 1.6. 7.10) and a freewheel system (5).

5. Device according to Claim 2 or 4,
**characterized in that**
the pedals (1.1) of the foot-powered drive mechanism (1) move in a approximately horizontal plane.

6. Device according to Claim 5,
**characterized in that**
the foot-powered drive mechanism (1) consists of a horizontal bar (1.2) swiveling about an approximately vertical shaft (1.3) and the pedals (1.1) positioned on the latter in an articulated manner, whereby the rod (1.2) holds at a lateral distance from the swivel shaft (1.3) movement transmission means, especially cable pulls or chains (1.4) which end at a lever (1.5) which may be connected via a coupling (1.5a) to an approximately vertical shaft (7) which in turn transmits the movement to a movement transmission mean and the associated freewheel of the freewheel system (5).

7. Device according to Claim 2 or 4,
**characterized in that**
the pedals (1.1) of the foot-powered drive mechanism (1) are moved linearly.

8. Device according to Claim 7,
**characterized in that**
the foot-powered drive mechanism (1) consists of two pedals (1.1a, 1.1b) which are positioned rotatably on a movement transmission mean, preferably an endless cable pull (1.4a), whereby the cable pull (1.4a) is looped around two spaced deflection rollers (1.6, 1.7) which may be driven by the linear pedal movement and may be connected by a translation device for transforming or transmitting movements (1.7, 1.3, 1.7b, 1.4b, 1.5) via a coupling (1.5a) to an approximately vertical shaft (7), where said shaft in turn transmits the movement to another movement transmission means, preferably a cable pull or chain pull, and the associated freewheel of the freewheel system (5).

9. Device according to Claim 2 or 4,
**characterized in that**
the foot-powered drive mechanism (1) consists of two pedals (1.1.) each of which swivels back and forth on a lever (1.2),
whereby a movement transmission mean, preferably a cable pull (1.4), is attached to the levers (1.2) which carry the pedals (1.1) on their ends and said cable pull runs over a deflection roller (1.5) which may be connected via a coupling (1.5a) to an approximately vertical shaft (7) which in turn transmits the movement to another movement transmission mean, preferably a cable or chain pull, and the associated freewheel of the freewheel system (5).

10. Device according to Claim 1 or 2,
**characterized in that**
another drive component is formed by a hand-powered drive mechanism (2) with hand-operated rods (operating rods 2.1L, 2.1R) whose drive movement is generated by a reciprocating movement of the operating rods (2.1L, 2.1R),
whereby the drive movement of the hand-powered drive mechanism (2) may be superimposed on the drive movements of other drive components with a device for transforming or transmitting movements (7.10, 7.11, 7.8) and a freewheel system (5), and where - if the device is constructed as a bicycle - the latter may be steered via these operating rods (2.1L, 2.1R).

11. Device according to Claim 3 or 10,
**characterized in that**
the operating rods (2.1L, 2.1R) of the hand-powered drive mechanism (2) may be moved apart and together in longitudinal direction of the device and/or transversely to it.

12. Device according to one or more of the aforementioned Claims,
**characterized in that**
a bearing shaft (2.11) which is located in the longitudinal plane of the device and is positioned with its front end at the frame so as to be able to swivel is angled at its rear end in the shape of a crank and has a bearing for an approximately vertical shaft (2.6) at which a cross bar (2.13) is positioned so as to be able to swivel, whereby said cross-bar has a coupling (2.12) which may be coupled with shaft (2.6) or bearing shaft (2.11); with a coupling (2.9) located on bearing shaft (2.11) for coupling a rod part (2.8) which is positioned rotatably on shaft (2.6) and is connected adjustably to a rod part (2.7); with a coupling (2.5 or 2.6c) which may be coupled with rod part (2.10); with operating rods (2.1L, 2.1R) for manual operation which are positioned so as to be able to swivel at the ends of crossbar (2.13), whereby each of said operating rods has an extension rod (2.3L, 2.3R) whose direction may be adjusted and which extends beyond bearing points (2.2, 2.10), whereby said extension rods are connected in an articulated manner with a set of rods (2.4L, 2.4R) extending transversely, whereby the inside ends of said set of rods each are connected in an articulated manner to rod parts (2.7, 2.8),
whereby the vertical shaft (2.6) holds a cardan joint (2.15, 7.2) which connects the vertical shaft (2.6) via a reversing coupling (7.2a, 7.1, 7.3, 7.4) to the lower vertical shaft (7) which is driven by the foot-powered drive mechanism (1).

13. Device according to one or more of the aforementioned Claims,
**characterized in that**
the operating rods (2.1L, 2.1R) may be moved in a vertical plane in the same or opposite direction.

14. Device according to Claim 13,
**characterized in that**
the operating rods (2.1L, 2.1R) are held in a holder (2.1Rb) which are connected via bevel wheels (2K, 2.3R') to the extension rods (2.3L, 2.3R).

15. Device according to Claim 1,
**characterized in that**
the seat surface (3.11) of the seat surface drive mechanism (12) has a horizontally oriented, rotatably positioned shaft (3.7); at one end of which a wheel (3.9) is attached in a torsion-proof manner, whereby said wheel engages with a cable pull (3.14) which is passed over the freewheel system (5); and on the other end of which a gear wheel (3.5) is positioned in a torsion-proof manner, whereby said gear wheel engages directly with another gear wheel (3.4) or indirectly via an intermediate wheel (3.6) which (3.4) is connected in a torsion-proof manner to the seat backrest (3.1) via shaft (3.3) positioned at the seat surface (3.11).

16. Device according to Claim 2 or 3,
**characterized in that**
another drive component is formed by a seat surface drive mechanism (12) whose drive movement is generated by a reciprocating translation movement of the seat surface (3.11) on a track (3.12) extending in longitudinal direction of the device,
whereby the drive movement of the seat surface drive mechanism (12) may be superimposed on the drive movements of other drive components via a device for transforming or transmitting movements (3.9) and a freewheel system (5).

17. Device according to one or more of the aforementioned Claims,
**characterized in that**
the seat surface (3.11) is locked to a frame of the device.

18. Device according to one or more of the aforementioned Claims,
**characterized in that**
the seat backrest (3.1) may be locked to the seat surface (3.11).

19. Device according to Claim 1 or 15,
**characterized in that**
an upper backrest part (3.13) of the seat backrest (3.1) swivels about a shaft in the plane of the seat backrest (3.1) and is positioned so that it may be coupled with the latter via a coupling (3.1b); and that on the side of the backrest part (3.13) a latching mechanism, preferably a hook (3.1L, 3.1R) for grasping the ring handles (4.1L, 4.1R) is provided whose reciprocating movement is transmitted via movement transmission means, preferably a cable pull (4.2) and deflection rollers (4.3L, 4.3R) as well as translation means (7.13, 7.15, 7.12, 7.8, 7.16, 7.9) to the freewheel system (5).

20. Device according to Claim 19,
**characterized in that**
the ring handles (4.1L, 4.1R) may be operated by hand or foot.

21. Device according to one or more of the aforementioned Claims,
**characterized by**
a gear wheel (7.10) which is connected in a torsion-proof manner to the bottom end of the vertical shaft (7) driven by the foot-powered drive mechanism (1) and which is connected via a translation (7.11, 7.17, 7.9) to the movement transmission mean leading to the freewheel system (5), preferably a cable pull (7.14, 6), and to the drive shaft (9).

22. Device according to one or more of the aforementioned Claims,
**characterized in that**
the drive movement of the hand-powered drive mechanism (2) may be transmitted to the freewheel system (5) via a pulley (7.5) which is positioned in a torsion-proof manner at a vertical shaft (17) using a movement transmission mean, preferably a cable pull (7.6); and that the drive movement of the foot-powered drive mechanism (1) may be transmitted to the freewheel system (5) via another movement transmission mean, preferably a cable pull (1.4).

23. Device according to one or more of the aforementioned Claims
**characterized in that**
the rotary movement of the shaft (2.6) transmitting the drive movement of the hand-powered drive mechanism (2) may be transmitted via a cable pulley (2.6b) on this shaft to the cable pull (7.6) leading to the freewheel system (5).

24. Device according to one or more of the aforementioned Claims,
**characterized in that**
a freewheel of the freewheel system (5) consists of two each coaxially arranged freewheel wheels (5e, 5d) of which one freewheel wheel (5c) is driven by the cable pull (3.14), and which transmits the drive via intermediate wheels (5z) and the second freewheel wheel (5d) to the drive shaft (5.1).

25. Device according to one or more of the aforementioned Claims,
**characterized in that**
the bearing shaft (2.11) is connected for the transmission of a rotary movement via transmission elements (8a) and a coupling (8.3) with the front wheel fork (8) which has lateral foot pedals (8.1) for steering and braking.

26. Device according to one or more of the aforementioned Claims,
**characterized in that**
the driving power from the hand-powered and/or the foot-powered drive, which is located at positions 7.10/7.9 and/or 1.7, is transmitted directly onto the freewheel system 5c by means of the rope 1.4.

27. Device according to one or more of the aforementioned Claims,
**characterized in that**
upon actuation of at least one of the drive components in the both the forward direction as well as in the backward direction the freewheel system (5) moves the drive shaft (5.1) always in one direction.

## Revendications

1. Appareil d'entraînement mû par la force musculaire pour véhicules et autres appareils, comprenant au moins deux organes d'entraînement pouvant être manoeuvrés indépendamment l'un de l'autre, dont les mouvements d'entraînement peuvent être transmis à un arbre d'entraînement par l'intermédiaire de moyens de transmission du mouvement,
caractérisé,
en ce que le premier organe d'entraînement est formé d'un dispositif d'entraînement de dossier (3) dont le mouvement d'entraînement s'effectue par un mouvement d'oscillation d'un dossier de siège (3.1) par rapport à une surface d'assise (3.11), et
en ce que le deuxième organe d'entraînement est formé d'un dispositif d'entraînement de surface d'assise (12) dont le mouvement d'entraînement s'effectue par un mouvement de translation en va-et-vient de la surface d'assise (3.11) sur une voie (3.12) s'étendant dans la direction longitudinale de l'appareil,
le mouvement d'oscillation du dossier (3.1) pouvant être superposé au mouvement de translation de la surface d'assise (3.11) au moyen d'un dispositif de transformation ou de transmission de mouvements (3.4, 3.5, 3.6, 3.9) et d'un système de roue libre (5) pour assurer l'entraînement combiné de l'arbre d'entraînement (5.1).

2. Appareil d'entraînement mû par la force musculaire pour véhicules et autres appareils comprenant au moins deux organes d'entraînement pouvant être manoeuvrés indépendamment l'un de l'autre dont les mouvements d'entraînement peuvent être transmis à un arbre d'entraînement par l'intermédiaire de moyens de transmission du mouvement,
caractérisé,
en ce que le premier organe d'entraînement est formé d'un dispositif d'entraînement de dossier (3), dont le mouvement d'entraînement s'effectue par un mouvement d'oscillation d'un dossier de siège (3.1) par rapport à une surface d'assise (3.11), et
en ce que le deuxième organe d'entraînement est formé d'un dispositif d'entraînement à pied (1) dont le mouvement d'entraînement s'effectue par un mouvement de va-et-vient d'au moins une pédale (1.1),
le mouvement d'oscillation du dossier de siège (3.1) pouvant être superposé au mouvement de va-et-vient de la pédale (1.1) au moyen d'un dispositif de transformation et de transmission de mouvements (3.4, 3.5, 3.6, 3.9) et d'un système de roue libre (5) pour assurer l'entraînement combiné de l'arbre d'entraînement (5.1).

3. Appareil d'entraînement mû par la force musculaire pour véhicules et autres appareils, comprenant au moins deux organes d'entraînement pouvant être manoeuvrés indépendamment l'un de l'autre, dont les mouvements d'entraînement peuvent être transmis à un arbre d'entraînement par l'intermédiaire de moyens de transmission du mouvement,
caractérisé,
en ce que le premier organe d'entraînement est formé d'un dispositif d'entraînement de dossier (3) dont le mouvement d'entraînement s'effectue par un mouvement d'oscillation d'un dossier de siège (3.1) par rapport à une surface d'assise (3.11),
et en ce que le deuxième organe d'entraînement est formé d'un dispositif d'entraînement à main ( 2) comprenant des barres pouvant être actionnées à la main (barres d'actionnement 2.1L, 2.1R) dont le mouvement d'entraînement s'effectue par un mouvement de va-et-vient des barres d'actionnement (2.1L, 2.1R),
le mouvement d'oscillation du dossier de siège (3.1) pouvant être superposé au mouvement de va-et-vient du dispositif d'entraînement à main (2.1L, 2.1R) au moyen d'un dispositif de transformation et de transmission de mouvements (3.4, 3.5, 3.6, 3.9) et d'un système de roue libre (5) pour assurer l'entraînement combiné de l'arbre d'entraînement (5.1) et, dans le cas où l'appareil est constitué par un cycle, ce dernier peut être dirigé à l'aide des barres d'actionnement (2.1L, 2.1R).

4. Appareil selon la revendication 1 ou 3,
caractérisé,
en ce qu'un autre organe d'entraînement est formé d'un dispositif d'entraînement à pied (1) dont le mouvement d'entraînement s'effectue par un mouvement de va-et-vient d'au moins une pédale (1.1),
le mouvement d'entraînement du dispositif d'entraînement à pied (1) pouvant être superposé aux mouvements d'entraînement des autres organes d'entraînement au moyen d'un dispositif de transformation ou de transmission de mouvements (1.4, 1.5, 7.10 ; 1.4, 1.5, 1.6, 7.10) et d'un système de roue libre (5).

5. Appareil selon la revendication 2 ou 4,
caractérisé,
en ce que les pédales (1.1) du dispositif d'entraînement à pied (1) peuvent se déplacer dans un plan à peu près horizontal.

6. Appareil selon la revendication 5,
caractérisé,
en ce que le dispositif d'entraînement à pied (1) est constitué par une barre horizontale (1.2) pouvant pivoter autour d'un axe (1.3) s'étendant dans une direction à peu près verticale, et par les pédales (1.1) articulées sur cette barre,
cependant qu'à une certaine distance latérale de l'axe de pivotement (1.3) sont prévus, sur la barre (1.2), des moyens de transmission du mouvement, en particulier des câbles de traction ou chaînes (1.4) qui se terminent par un levier (1.5) qui peut être relié par l'intermédiaire d'un accouplement (1.5a) à un arbre (7) s'étendant dans une direction à peu près verticale qui, de son côté, transmet le mouvement à un moyen de transmission du mouvement et à la roue libre correspondante du système de roue libre (5).

7. Appareil selon la revendication 2 ou 4,
caractérisé,
en ce que les pédales (1.1) du dispositif d'entraînement à pied (1) peuvent se déplacer en ligne droite.

8. Appareil selon la revendication 7,
caractérisé,
en ce que le dispositif d'entraînement à pied (1) est composé d'une ou deux pédales (1.1a, 1.1b) qui sont montées mobiles en rotation sur un moyen de transmission du mouvement, de préférence un câble de traction sans fin (1.4a),
le câble de traction (1.4a) embrassant deux poulies de renvoi (1.6, 1.7) éloignées l'une de l'autre qui peuvent être entraînées par le mouvement linéaire de la pédale et peuvent être reliés par un dispositif d'amplification servant à transformer et à transmettre les mouvements (1.7, 1.3, 1.7b, 1.4b, 1.5), par l'intermédiaire d'un accouplement (1.5a), à un arbre (7) s'étendant dans une direction à peu près verticale, qui, de son côté, transmet le mouvement à un autre moyen de transmission du mouvement, de préférence une transmission à câble ou à chaîne, et à la roue libre correspondante du système de roue libre (5).

9. Appareil selon la revendication 2 ou 4,
caractérisé,
en ce que le dispositif d'entraînement à pied (1) est composé de deux pédales (1.1) qu'on peut faire osciller en va-et-vient chacune sur un levier (1.2)
cependant qu'aux leviers (1.2) qui portent les pédales (1.1) à une extrémité est fixé un moyen de transmission du mouvement, de préférence une transmission à câble (1.4) embrassant une poulie de renvoi (1.5) qui peut être reliée par l'intermédiaire d'un accouplement (1.5a) à un arbre (7) s'étendant dans une direction à peu près verticale, qui, de son côté, transmet le mouvement à un autre moyen de transmission du mouvement, de préférence une transmission à câble ou à chaîne, et à la roue libre correspondante du système de roue libre (5).

10. Appareil selon la revendication 1 ou 2,
caractérise,
en ce qu'un autre organe d'entraînement est formé d'un dispositif d'entraînement à main (2) comprenant des barres pouvant être actionnées à la main (barres d'actionnement 2.1L, 2.1R), dont le mouvement d'entraînement s'effectue par un mouvement de va-et-vient des barres d'actionnement (2.1L, 2.1R),
le mouvement d'entraînement du dispositif d'entraînement à main (2) pouvant être superposé aux mouvements d'entraînement des autres organes d'entraînement au moyen d'un dispositif de transformation ou de transmission de mouvements (7.10, 7.11, 7.8) et d'un système de roue libre (5), et appareil pouvant être dirigé au moyen des barres d'actionnement (2.1L, 2.1R) dans le cas où il est constitué par un cycle.

11. Appareil selon la revendication 3 ou 10,
caractérisé,
en ce que les barres d'actionnement (2.1L, 2.1R) du dispositif d'entraînement à main (2) peuvent se déplacer dans la direction longitudinale de l'appareil et/ou transversalement à cette direction, en s'éloignant et en se rapprochant l'un de l'autre.

12. Appareil selon une ou plusieurs des revendications précédentes,
caractérisé par,
un arbre de palier horizontal (2.11) disposé dans le plan longitudinal de l'appareil, qui est monté oscillant sur le châssis par son extrémité avant, est coudé en manivelle à son extrémité arrière, et présente un palier pour un arbre (2.6) s'étendant à peu près verticalement, sur lequel est monté oscillante une barre (2.13) dirigée dans une direction transversale, qui présente un accouplement (2.12) pouvant être accouplé à l'arbre (2.6) ou à l'arbre de palier (2.11), et il est prévu en outre un accouplement (2.9) agencé sur l'arbre de palier (2.11) pour accoupler à une partie de barre (2.8) qui est montée rotative sur l'arbre (2.6) et est reliée de façon réglable à une partie de barre (2.7) et un accouplement (2.5 et 2.6c) qui peut être accouplé avec la partie de barre (2.10), les barres d'actionnement (2.1L, 2.1R) prévues pour l'actionnement à main (2), montées pivotantes aux extrémités de la barre transversale (2.13) et qui présentent chacune une barre prolongatrice (2.3L, 2.3R) qui se prolonge chacune au-delà d'un palier (2.2, 2.10), et sert à changer la direction, étant reliées de façon articulée à une tringlerie (2.4L, 2.4) s'étendant dans la direction transversale, dont les extrémité intérieures sont reliées chacune, de façon articulée à une des parties de barres (2.7, 2.8)
cependant que sur l'arbre vertical (2.6) est monté un joint de cardan (2.15, 7.2) qui relie l'arbre vertical (2.6) à l'arbre vertical (7) situé au-dessous, attaqué par le dispositif d'entraînement à pied (1), par l'intermédiaire d'un accouplement tournant (7. 2a, 7.1, 7.3, 7.4).

13. Appareil selon une ou plusieurs des revendications précédentes,
caractérisé,
en ce que les barres d'actionnement (2.1L, 2.1R) peuvent se déplacer dans un plan vertical, dans le même sens ou l'une en sens inverse de l'autre.

14. Appareil selon la revendication 13,
caractérisé,
en ce que les barres d'actionnement (2.1L, 2.1R) sont tenues dans une monture (2.1Rb) qui est reliée aux barres prolongatrices (2.3L, 2.3R) par l'intermédiaire de roues coniques (2K, 2.3R').

15. Appareil selon la revendication 1,
caractérisé,
en ce que la surface d'assise (3.11) du dispositif d'entraînement de surface d'assise (12) présente un arbre (3.7) orienté horizontalement, monté rotatif, à une extrémité duquel est montée solidairement en rotation une roue (3.9) qui est en prise avec une transmission à câble (3.14) qui passe sur le système de roue libre (5), tandis que, sur son autre extrémité, est montée solidairement en rotation une roue dentée (3.5) qui engrène avec une autre roue dentée (3.4) soit directement, soit indirectement par l'intermédiaire d'une roue intermédiaire (3.6), la roue dentée (3.4) étant reliée solidairement en rotation au dossier (3.1) par un arbre (3.3) tourillonné sur la surface d'assise (3.11).

16. Appareil selon la revendication 2 ou 3,
caractérisé,
en ce qu'un autre organe d'entraînement est formé d'un dispositif d'entraînement de surface d'assise (12) dont le mouvement d'entraînement s'effectue par un mouvement de translation en va-et-vient de la surface d'assise (3.11) sur une voie (3.12) qui s'étend dans la direction longitudinale de l'appareil,
le mouvement d'entraînement du dispositif d'entraînement de surface d'assise (12) pouvant être superposé aux mouvements d'entraînement des autres organes d'entraînement au moyen d'un dispositif de transformation ou de transmission de mouvements (3.9) et d'un système de roue libre (5).

17. Appareil selon une ou plusieurs des revendications précédentes,
caractérisé,
en ce que la surface d'assise (3.11) est bloquée sur le châssis de l'appareil.

18. Appareil selon une ou plusieurs des revendications précédentes,
caractérisé,
en ce que le dossier (3.1) peut être bloqué sur la surface d'assise (3.11).

19. Appareil selon la revendication 1 ou 15,
caractérisé,
en ce qu'une partie supérieure (3.13) du dossier (3.1) peut osciller autour d'un axe s'étendant dans le plan du dossier (3.1) et peut être accouplé à cet axe par l'intermédiaire d'un accouplement (3.1b) et il est prévu, latéralement à la partie (3.13) du dossier, de chaque côté, un dispositif d'accrochage, de préférence un crochet (3.1L, 3.1R) pour l'accrochage de poignées annulaires (4.1L, 4.1R) dont le mouvement oscillant en va-et-vient est transmis au système de roue libre (5) par l'intermédiaire d'un moyen de transmission du mouvement, de préférence une transmission à câble (4.2) et des poulies de renvoi (4.3L, 4.3R) ainsi que de moyens d'amplification du mouvement (7.13, 7.15, 7.12, 7.8, 7.16; 7.9).

20. Appareil selon la revendication 19,
caractérisé,
en ce que les poignées annulaires (4.1L, 4.1R) peuvent être actionnées à la main ou au pied.

21. Appareil selon une ou plusieurs revendications précédentes,
caractérisé par,
une roue dentée (7.10) reliée solidairement en rotation à l'extrémité inférieure de l'arbre vertical (7) attaqué par le dispositif d'entraînement à pied (1), cette roue dentée étant reliée, par un dispositif d'amplification (7.11, 7.17, 7.9) au moyen de transmission du mouvement qui aboutit au système de roue libre (5), de préférence une transmission câble (7.14, 6), et à l'axe d'entraînement (9).

22. Appareil selon une ou plusieurs des revendications précédentes,
caractérisé,
en ce que le mouvement d'entraînement du dispositif d'entraînement à main (2) peut être transmis au système à roue libre (5) par l'intermédiaire d'une poulie (7. 5) qui est montée solidairement en rotation sur un arbre vertical (17), par l'intermédiaire d'un moyen de transmission du mouvement, de préférence une transmission à câble (7.6), et le mouvement d'entraînement du dispositif d'entraînement à pied (1) peut être transmis à ce système de roue libre par l'intermédiaire d'un autre moyen de transmission du mouvement, de préférence une transmission à câble (1.4).

23. Appareil selon une ou plusieurs des revendications précédentes,
caractérisé,
en ce que le mouvement de rotation de l'arbre (2.6) qui transmet le mouvement d'entraînement du dispositif d'entraînement à main (2) peut être transmis, par l'intermédiaire d'une poulie (2.6b) de transmission à câble, à la transmission à câble (7.6) qui aboutit au système de roue libre (5).

24. Appareil selon une ou plusieurs des revendications précédentes,
caractérisé,
en ce que chaque roue libre du système de roue libre (5) est composée de deux roues de roue libre (5e, 5d) disposées coaxialement, dont la roue (5e) est entraînée par la transmission à câble (3.14) et transmet la force d'entraînement à l'arbre d'entraînement (5.1) par l'intermédiaire de roues intermédiaires (5z) et de la deuxième roue de roue libre (5d).

25. Appareil selon une ou plusieurs des revendications précédentes,
caractérisé,
en ce que, pour la transmission d'un mouvement en rotation, l'arbre de palier (2.11) est relié, à l'aide d'organes de transmission (8a) et d'un accouplement (8.3), à la fourche de roue avant (8) qui présente des pédales latérales (8.1) pour la direction et le freinage.

26. Appareil selon une ou plusieurs des revendications précédentes,
caractérisé,
en ce que la force motrice est transmise directement de l'entraînement à main et/ou à pied, qui se trouve aux positions (7.10/7.9) et/ou (1.7), au système de roue libre (5c) à l'aide du câble (1.4).

27. Appareil selon une ou plusieurs des revendications précédentes,
caractérisé,
en ce que le système de roue libre (5) entraîne toujours l'arbre d'entraînement (5.1) dans un même sens lorsqu'on actionne au moins un des organes d'entraînement, aussi bien dans un sens que dans l'autre.
